# EUROPEAN PATENT SPECIFICATION

(11) **EP 0 792 455 B1**
(45) Date of publication and mention of the grant of the patent: **12.04.2000**
(21) Application number: 95917869.0
(22) Date of filing: 12.05.1995
(51) Int. Cl.: G01N 27/90

(54) **EDDY CURRENT HYBRID PROBE**
WIRBELSTROMHYBRIDSONDE
SONDE HYBRIDE A COURANT DE FOUCAULT

(30) Priority: 16.11.1994 GB 9423146
(43) Date of publication of application: 03.09.1997
(73) Proprietor: R/D TECH, Québec, Québec G1P 2J7 (CA)
(72) Inventor: Samson, Rock, Saint-Nicolas, Québec G0S 2Z0 (CA)
(74) Representative: Hammar, Ernst
(86) International application number: CA9500282
(87) International publication number: WO9615445

(56) References cited:
- US-A- 3 694 740
- US-A- 4 203 069
- US-A- 4 673 879

## Description

### Technical Field

This invention is related to the field of non-destructive testing on tubes, pipes and rods, and more particularly to an eddy current probe and probing method for locating and measuring flaws on metallic tubes and rods.

### Background Art

The eddy current method of non-destructively evaluating metal products is widely used. Basically the method consists in moving a coil over the item to be tested. A high frequency alternating current in the coil produces an alternating magnetic field. When the magnetic field of the coil intersects the item, eddy currents are induced in the specimen close to its surface. These eddy currents in turn induce a magnetic field in opposition to the primary field around the coil, causing a partial reduction in the field of the coil. This decrease in magnetic flux through the coil causes a change in the impedance of the coil. The impedance caused by the eddy currents is in turn dependent on the resistance these currents encounters as they circulate through the item to be tested. Since flaws on the surface (such as cracks, pits, or regions of local thinning) create regions of higher resistance at the flaw locations, eddy current probes may be used to locate flaws. Eddy current testing is essentially the measurement of changes in the impedance of a probe.

In an AC bridge circuit (commonly used in eddy current testing), the change of impedance in the coil will be reflected by a change in the voltage and phase across the circuit. These changes can be analyzed and displayed with the proper equipment so that flaws can be generally characterized. To be analyzed, the AC signal is usually demodulated in its resistive and reactive components (often referred to as X and Y or real and imaginary components). The components will have similar shapes, but different amplitude depending on the AC signal phase caused by the flaw. The demodulated signals show voltage amplitude variation in time and thus allow physical localization of the flaw on the tested part.

The resistive and reactive components can be subsequently added in a vector sum. The sum is then displayed on an X-Y plane called a *phasor* diagram. The phasor diagram shows amplitude and phase change of the AC signal over a fixed period of time. The shape produced by flaws on the phasor diagram allows further characterization of flaws as being a cracks, scorch marks, rust patches, etc.

Eddy current testing is used in many fields, such as pipe or tube inspection used in the heat exchangers of nuclear steam generators. Lately, eddy current testing has also been used for the inspection of control rods used in the core of the reactor. Usually the control rods are filled with a material which absorbs neutrons readily while the outer shell is made out of a metallic alloy. Control rods are set between fuel rods to regulate the rate the of nuclear reaction. Withdrawal of the rods permits free passage of neutrons from one fuel rod to another, thus increasing the reaction rate. The control rods are guided between the fuel rods by perforated plates. Since both the control rods and the fuel rods are submersed in water -where small, constant vibrations are present- the control rods have a tendency to rub against the rim of the guiding holes in the plate thus causing damage to their surface.

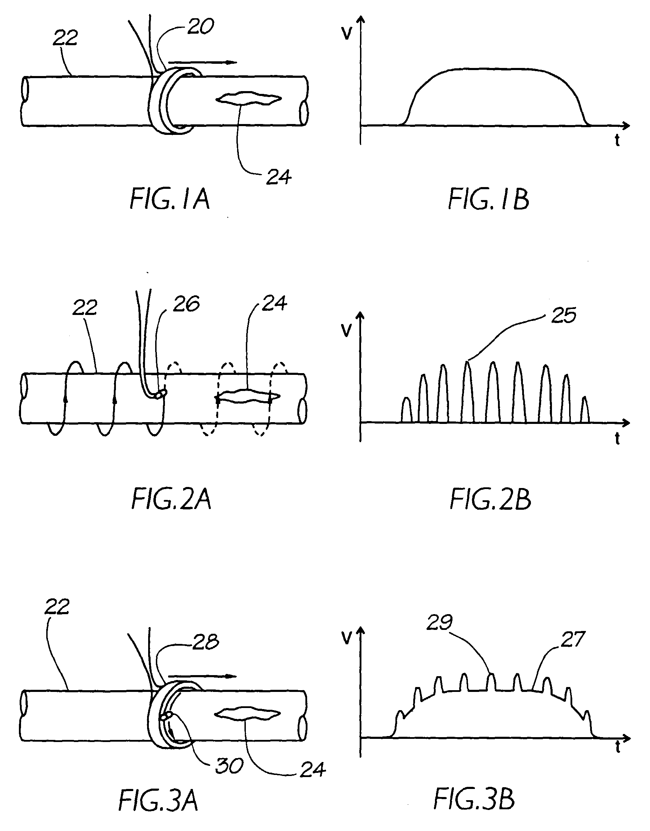

In eddy current inspections, probes of the prior art generally come in one of the two following configurations: the encircling probe and the rotating probe. An encircling probe according to the prior art can be characterized by the arrangement shown in Fig. 1A which produces an output signal illustrated in Fig. 1B as the coil **20** moves over the flaw **24**.

In an encircling probe (Fig. 1A), a circular coil **20** encircles the cylindrical item **22** to be inspected and moves along its length. When a flaw **24** (such as a lengthwise crack or a rusted area) is encountered, the probe registers a change in voltage across the testing circuit. The demodulated signals will simply show a voltage change over a certain period of time (Fig. 1B). The general localization and overall importance of the flaw can then be deduced.

Though mechanically simple to implement, this configuration does not allow exact flaw size measurement and localization. The response from such a probe does not permit differentiation between, for instance, four small holes and a single large one. The information obtained is the lengthwise position along the rod (or tube) where the flaw is present and relative size of the flaw. In no way can its angular position and exact size be characterized.

A rotating probe according to the prior art is generally represented in Fig. 2A which produces an output signal illustrated in Fig. 2B. In the case of rotating probes (Fig. 2A), a small energized coil **26** orbits around the cylindrical item **22** to be inspected, while traveling along its length. This results in a helical path. Since the path of the coil **26** takes it over the flaw **24** at a certain angle relative to that flaw, the probe can record its width. While the coil orbits around the tube, it passes a certain number of times over the flaw. The signal given by the probe (in terms of resistive and reactive components) resembles a series of "humps" **25** (Fig. 2B) occurring over a certain period of time. Each hump **25** is equivalent to the width of the crack surveyed by the coil. The diameter of the tube and the traveling speed of the coil being known variables, the length of the flaw and its position on the tube or rod can then be precisely determined. This kind of probe can thus determine the size, exact location and importance of the flaw.

U.S. Patent 4,855,677 *to Clark, Jr. et al* shows a probe based on this principle but applied for use inside a tube. In this case, the rotating coil travels over the inner surface of the tube.

However, eddy current probes are often used in hostile environments (underwater, in irradiated areas of nuclear power generators). In the case of external inspections of rods and tubes, rotating probes require a complex mechanical setup for the coil to be able to orbit the rod (or tube) while still being supplied with a high frequency AC signal. Since it is highly impractical to have the AC signal source turning with the probe, slip rings are needed to feed the rotating probe with the AC signal. The friction generated by these sliding contacts creates undesired noise which affects the test results. They are also sensitive to rust and to accumulation of dirt. Probes based on that principle are subject to frequent malfunctions and early wear. This constitutes the major drawback of rotating probes.

Also, with rotating probes, it is possible that between two turns around the rod, the coil might miss a small flaw, depending on the pitch of the path of the coil around the rod. Rotating probes also have another problem known as lift-off. During inspection, it is possible that the probe wobbles, creating a small gap between the coil an the inspected surface. This gap usually affects the accuracy of the test.

A number of patented inventions have been proposed to remedy these various problems. These prior art inventions are generally represented by the arrangement shown in Fig. 3A whose output signal is illustrated in Fig. 3B. They are based on the following principle: an encircling detector coil **28** (Fig. 3A) is mounted at axially displaced locations along the cylindrical part **22** to be inspected. To enhance the response of this detector coil, a field altering object **30** having a high magnetic permeability is mounted in close proximity to the coil. In this manner, the field altering object disrupts the coil magnetic field in continuously varying locations along the part **22** and near the coil **28** itself.

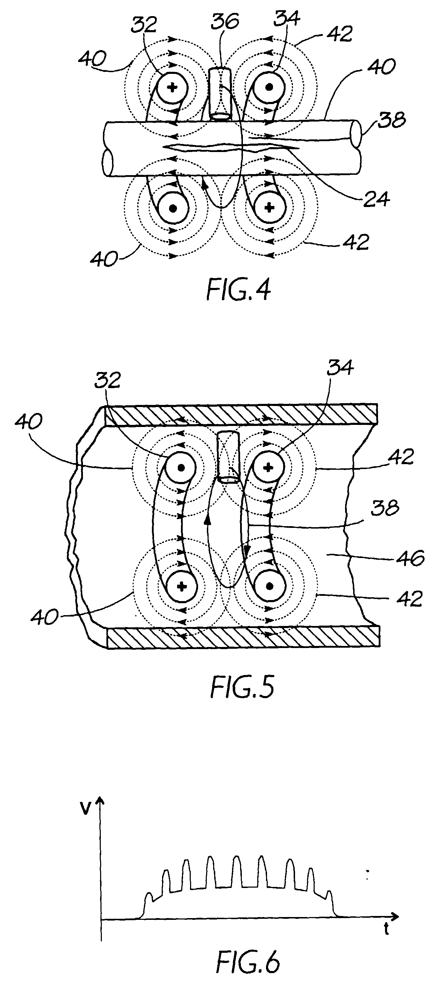

When this assembly is passed over a tube and encounters a flaw, two things will happen. When the coil **28** reaches the flaw, a first change in voltage is recorded by the analyzing circuitry. But when the field altering object **30** orbiting the coil **28** also passes over the flaw **24**, an additional change of voltage is recorded. This change is a function of the volume and width of the flaw. This results in the resistive and reactive components having the appearance of two overlapping signals (Fig. 6): one from an encircling probe **27** and one from a rotating probe **29**. One is proportional to the length of the flaw, the other characterizes its width and both characterize its volume.

U.S. Patent 4,203,069 *to Davis* discloses such a probe for inspecting the interior of tubes that uses this principle. The apparatus comprises an exciter/detector coil and a ferrite element mounted on the perimeter of a barrel, the barrel rotating inside the coil. The coil is energized with a high frequency signal that induces eddy currents in the tube. While this apparatus travels inside the tube, the rotating ferrite disrupts the field generated by the coil. When the probe passes over a flaw, the response is in the form of the desired two overlapping signals. The patent however does not disclose any practical method for inspecting the exterior of rods or tubes.

Another device based on the use of a coil/field altering object combination is disclosed in U.S. Patent 4,673,879 *to Harris et al* wherein a cylindrical metallic sleeve is rotatably supported about a workpiece path of travel. Two differentially wound energization coils surround the sleeve near two apertures in the sleeve. The coils are energized with a high frequency signal that induces eddy currents in the workpiece. The apertures periodically disrupt the eddy current inducing magnetic fields and enhances signals from the coils indicative of the presence of flaws in the workpiece.

U.S. Patent 4,683,430 *to Harris et al* also proposes a combination of an encircling coil with a field altering object. In this case two encircling coils are used, one of them comprising a tubular pathway. The pathway is positioned between the coil and the rod. A steel ball rotates inside the pathway ball, acting as the field altering object. However, use of a steel ball as field altering element is not very practical. Steel being highly electrically conductive by its nature, the ball will also be subject to eddy currents. These eddy current will in turn affect the response of the probe, making it much harder to analyze.

Tests conducted by the inventor has shown that these types of combination - that is a single coil matched with a single field altering object- result in a signal that is difficult to analyze. The reason being that the strength of the signal generated by the field altering object is weak relatively to the overall signal of the encircling coil. Generally speaking, the portion of signal generated by the field altering object represents round 20% of the overall signal or even less. This makes it very difficult to determine, at the signal analysis stage, what part of the signal is generated by the field altering object. As an example, in the case of a small flaw, the signals generated by the field altering object and the encircling probe would be almost indistinguishable.

Another approach is presented in U.S. Patent 3,694,740 to Bergstrand where two sets of detecting elements are used in conjunction. The first set consists in two coils that are bridge coupled or differentially coupled. A difference in potential across the circuit indicates the presence of a flaw. However, when the two coils are simultaneously placed over a long flaw, the circuit will respond as if no flaw was present. To compensate for this, a second set consisting of a pair of Hall effect elements - connected to a differential amplifier - orbits the inspected part near the coils. A positive or negative output of the amplifier indicates the presence of a flaw. This type of probe possesses two major drawbacks. First, if the flaw is two dimensional (which would be the case of a long patch of rust), there is a strong possibility that both Hall effect elements would be over the flaw simultaneously. The differential amplifier would then also respond as if there were no flaw. As a result, the rust patch would go undetected. The second drawback resides in the necessity of slip rings and brushes to feed power and remove the signal from the rotating elements. This makes this type of probe just as prone to early wear and breakage as the rotating probe described above and disclosed by Clark.

### Objects of the Invention

To remedy these drawbacks, the invention has several objects.

The first object of the invention is to provide an hybrid eddy current probe that eliminates the need for a slip ring, while still retaining the flaw measuring capabilities of the rotating probe.

The second object is to provide a probe that is mechanically simple and dependable.

The third object is to provide an hybrid eddy current probe that can characterize flaw size, position and importance without the risk of missing a smaller flaw.

The fourth object is to provide an hybrid eddy current probe in which the signal of the field altering object represents around 50% of the overall response of the probe to a flaw. That augmentation in signal ratio facilitates distinction between the portions of signal generated by the encircling coil and the field altering object.

The fifth object is to provide a probe in which the probe response to a flaw is composed only of the signal generated by the field altering object. The resulting signal would be identical to the signal produced by a rotating probe.

Another object of the invention is to provide rod testing apparatus capable of testing several rods at the same time.

A further object is to provide a probe based on the principle of the invention for use in internal inspection of tubes.

### Summary of the Invention

The present invention provides a method and an apparatus of the general type known in U.S. Patent 4,673,879. According to the invention, there is provided an eddy current probe for non-destructive testing of a conductive elongated member in which the probe comprises means for generating an oscillating magnetic field directed towards a cross-sectional peripheral surface of the elongated member including a pair of coils ranged to be spaced apart along the elongated member to produce an enhanced combined magnetic field component perpendicular to the cross-sectional peripheral surface in a space between the coils and a reduced magnetic field component lengthwise along the elongated member, movable or rotatable means for altering the magnetic field at points along the cross-sectional peripheral surface provided between the coils, and means for detecting and analyzing an impedance of the generating means as the generating means is moved along the elongated member and as the rotatable altering means is moved over the peripheral surface.

According to the invention, there is also provided a method for non-destructive, eddy current testing of a conductive elongated member comprising the steps of generating an oscillating magnetic field directed towards a cross-sectional peripheral surface of the elongated member using a pair of coils arranged to be spaced apart along the elongated member to produce an enhanced combined magnetic field component perpendicular to the cross-sectional peripheral surface in a space between the coils and a reduced magnetic field component along the elongated member, altering the magnetic field at points around the peripheral surface between the coils, and detecting and analyzing a permeability of the elongated member along the elongated member and at points along the peripheral surface.

### Brief description of the drawings

Fig. 1A is a schematic view of an encircling probe of the prior art.
Fig. 1B is a voltage/time graph of a prior art encircling probe's response to a flaw.
Fig. 2A is a schematic view of a rotating probe of the prior art.
Fig. 2B is a voltage/time graph of a prior art rotating probe's response to a flaw.
Fig. 3A is a schematic view of an encircling probe combined with a field altering object of the prior art.
Fig. 3B is a voltage/time graph of the response of an encircling probe combined with a field altering object of the prior art.
Fig. 4 is a schematic view of the hybrid probe of the invention used over a rod.
Fig. 5 is a schematic view of the hybrid probe of the invention used inside a tube.
Fig. 6 is a voltage/time graph of the response of the hybrid probe of the invention.
Fig. 7 is an electrical schematic of a bridge circuit using the preferred embodiment of the invention.
Fig. 8 is an isometric view of the probe of the invention for inspection of rods.
Fig. 9 is a top view of the probe of Fig. 8.
Fig. 10 is a cross-section according to line 10-10 of Fig. 9.
Fig. 11 is a exploded view of the probe of Fig. 8.
Fig 12 is a isometric view of a typical inspection probe arrangement.

### Detailed Description of the Preferred Embodiment

As mentioned before, in the prior art the effect of the probe is field altering object generally represents about 20% of the total strength of the probe response to a flaw (Fig. 3B). To push this percentage past the 50% mark, in the preferred embodiment, the configuration illustrated in Fig. 4 is used. Instead of using a single coil, two coils **32** and **34** are used, side by side and in relatively close proximity, with a field altering object **36** rotating in the space between the coils. Preferably the field altering object **36** has a very high magnetic permeability and the lowest possible electrical conductivity. The two coils **32** and **34** are energized with the same high frequency signal but are wired so that the current flows in opposite directions in each coil. This has a direct effect over the combination of the magnetic field **40** and **42** generated by the coils. In the space between the coils -that is along the path **38** of the field altering object- the magnetic fields flow in the same direction, thus being added together. Over the surface **44** of the inspected object 22, the fields flow in opposite directions, thus subtracting themselves. As a result, the part of the response signal affected by the field altering object **36** is strengthened while the effect of the coils **32** and **34** over the surface is diminished. The inventor has observed that this configuration allows the portion of the signal affected by the field altering object to amount to about 50% or even 70% of the overall response of the probe to a flaw **24**. The demodulated resistive and reactive component signals will look like Fig. 6.

While distance between the encircling coils **32** and **34** an the surface **44** may vary according to the conditions of the inspection, it is important that the field altering object **36** be as near as possible to the surface **44**. It is also important that one extremity of the object **36** be between the two coils at all times. In the preferred embodiment, the field altering object **36** is cylindrical and orbits between coils **32** and **34** so that it is always perpendicular to the surface **44** of the cylindrical part **22**. The coils **32** and **34** should be as near as possible to the object **36** without interfering with its movement.

As shown in Fig. 5, this arrangement can also be adapted for use inside tubes. A pair of coils **32** and **34** and a field altering object **36** are still used. In this case however, the current flow within the coils is reversed, so that the magnetic fluxes **40** and **42** from each coil still subtract themselves from each other over the interior wall **46** of the tube. However, the fluxes still add up along the path **38** of the coil. The response to of this arrangement to a flaw would also look like Fig. 6.

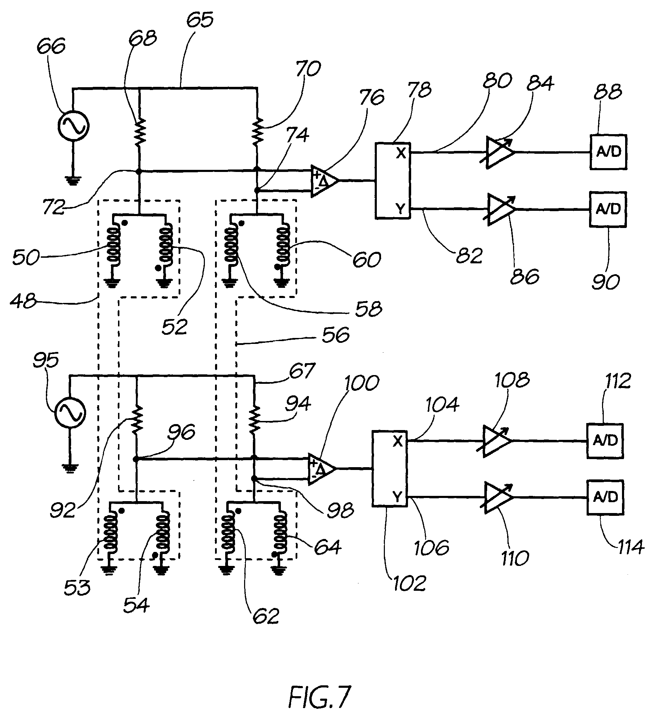

Most eddy current instrumentation use an AC bridge to sense the slight change in impedance between the detection coils and a reference impedance. The preferred embodiment -that can be used to test control rods in nuclear reactor- of the present invention is illustrated in Fig. 7, where one can see a diagram of the basic excitation/detection circuitry. In this embodiment, a typical hybrid probe **48** features a total of four encircling coils divided in two pairs. A first pair comprises detection coils **50** and **52** between which the field altering object turns, and a second pair comprises correction coils **53** and **54**. Detection coils **50** and **52** and correction coils **53** and **54** are separated by the necessary distance so that their magnetic fields do not influence each other. Coils **50**, **52** and the field altering object are arranged according to the configuration illustrated in Fig. 4. Correction coils **53** and **54** are identically arranged with the exception that no field altering object is present. The signal coming from the pair of correction coils **53** and **54** is later subtracted from the signal of detection coils **50** and **52**. When the probe passes over a flaw, the response signal of the hybrid probe will be similar to that of the rotating probe.

Impedance changes in the probe are not only generated by the flaws, but can also by affected by other factors, such as ambient temperature. Also a reference signal is needed to insure balance in the bridge circuit. The reference signal is taken from another identical probe (called a reference probe **56**) where a flawless section of rod is inserted. The signal from the reference probe **56** is subtracted (in an AC bridge) from the signal generated by the inspecting probe **48**. The resulting response is as much as possible only influenced by the presence of a flaw. The reference probe **56** comprises its own pair of detection coils **58** and **60** and its pair of control coils **62** and **64**. A field altering object is also placed between coils **58** and **60**. However, in the reference probe, it is not necessary that the object be in motion. If an array of rods is used with a corresponding array probes, only one reference probe can be used for all the probes of the array. It is important that the reference **56** probe be located in the same environment as probe **48**, which actually performs the test. Otherwise the impedance changes due to the environment will to be compensated.

In all probes, each pair of coils is connected in parallel but the coils are wound in opposite directions, according to the configuration illustrated in Fig. 7.

To perform the tests, the coils from the two probes **48** and **56** (Fig. 7) are wired together to form two AC bridge circuits. In the first bridge circuit **65**, the first arm is composed of the pair formed by coils **50** and **52** (that are enhanced by a field altering object) of testing probe **48**. The second arm is composed of coils **58** and **60** of the reference probe. The third and forth arms comprise resistive elements **68** and **70**. Physically the resistive elements **68** and **70** are often part of an AC signal driver comprising the AC current source **66** of the bridge. Points **72** and **74** are connected to a differential amplifier **76**. Point **72** is connected to the positive input of amplifier **76** while point **74** is connected to the negative input.

Resistive elements **68** and **70** are chosen so that when probe **48** passes over a flawless area, the bridge is in balance. Balance is indicated by a zero response from the differential amplifier **76**, which means that points **72** and **76** have the same instantaneous voltage. Since both probe **48** and reference probe **56** share the same environment, any impedance change due to temperature will be compensated/cancelled in the differential amplifier.

The AC signal from the amplifier is then fed into an analyzer or demodulator **78** to be separated into its resistive **80** and reactive **82** components. At this point, the resistive and reactive components of the AC signal -when encountering a flaw- can be illustrated as in Fig. 6. Demodulated signals **80** and **82** can then be amplified by variable gain amplifiers **84** and **86** before being converted to digital signals by analog-to-digital converters **88** and **90**. The digital signal can later be processed by analyzing software. The differential amplifier **70**, demodulator **78**, variable gain amplifiers **80** and **86** and analog-to-digital converters **88** and **90** are all components of the signal acquisition hardware to which the probe output is fed. Such signal acquisition hardware can be readily supplied by manufacturers of eddy current testing equipment.

The second bridge **67** has the same layout as the first. In this case however, the first arm is composed of the pair formed by coils **53** and **54** of testing probe **48**, the second arm is composed of coils **62** and **64** of the reference probe **56**, the third and forth arms comprise resistive elements **92** and **94**. Physically the resistive elements are often part of an AC signal driver comprising AC current source **96**. Point **96** and **98** of are connected to a differential amplifier **100**. Point **96** is connected to the positive input of amplifier **100** while point **98** is connected to the negative input.

Resistive elements **92** and **94** are chosen so that when probe **48** passes over a flawless area, the second bridge **67** is in balance. Balance is indicated by a zero response from the differential amplifier **100**. Since both probe **48** and reference probe **56** share the sane environment, any impedance change due, for example, to temperature will be compensated/cancelled in the differential amplifier.

The AC signal from the amplifier is then fed into a demodulator **102** to be separated into its resistive **102** and reactive **106** components. At this point, the component of the AC signal -when encountering flaw- will look like Fig. 2B. Demodulated signals **102** and **106** can then be amplified by variable gain amplifiers **108** and **110** before being converted to digital signals by analog-to-digital converters **112** and **114**. The digital signal can later be processed by analyzing software. The differential amplifier **100**, demodulator **102**, variable gain amplifiers **108** and **110** and analog-to-digital converters **112** and **114** are also components of the same signal acquisition hardware that is used in the first bridge.

The analysis part is often performed on a tabletop computer which is equipped with the hardware necessary for the computer to accept the digital signals. Now the analysis software can use two signals: one coming from the first bridge **65** (which is a signal affected by a field altering object) and one coming from the second bridge **67**.

As described above, the demodulated signals **80** and **82** coming from the first bridge have the shape illustrated in Fig. 6. Any of the two signals can be directly used to characterize the width, length and volume of the flaw. Any small flaw that might be missed by the field altering object will show in the portion of the signal generated by the encircling coils.

However, since it disturbs the magnetic field, the rotating field altering object generates a small "parasite" signal even when the probe passes over a flawless part of a rod. This can be filtered out by the data analysis software. The filtering process is simple. A series of digital "prints" of the signal of the probe passing over a flawless rods is first recorded with the eddy current hardware. An average of these signals is calculated. The resulting signal is then subtracted from the signal given by the probe. This subtraction is digitally performed by the data analysis software.

It is often useful to obtain resistive and reactive components signals similar to the output given by a rotating probe (Fig. 2B). This is when the signals from second bridge **67** come into play. The signals from the second bridge **67** fed to the data analysis software are those of encircling probes (Fig. 1B). If they are subtracted from the signals from the first bridge **65** (Fig. 6) the resulting output will be similar to that of a rotating probe (Fig. 2B). Once again this subtraction is performed digitally by the analyzing software. Of course the software takes into account the delay between the signals from the first bridge and the signals from the second bridge.

The final result consists of two demodulated signals: the resistive and reactive components. These can be analyzed and viewed in any fashion desired and also displayed in a phasor diagram.

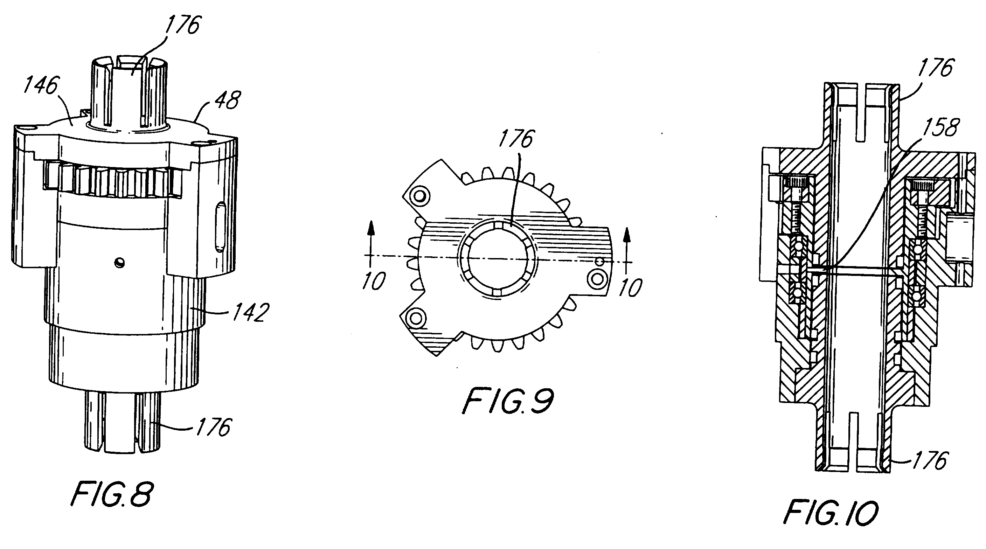

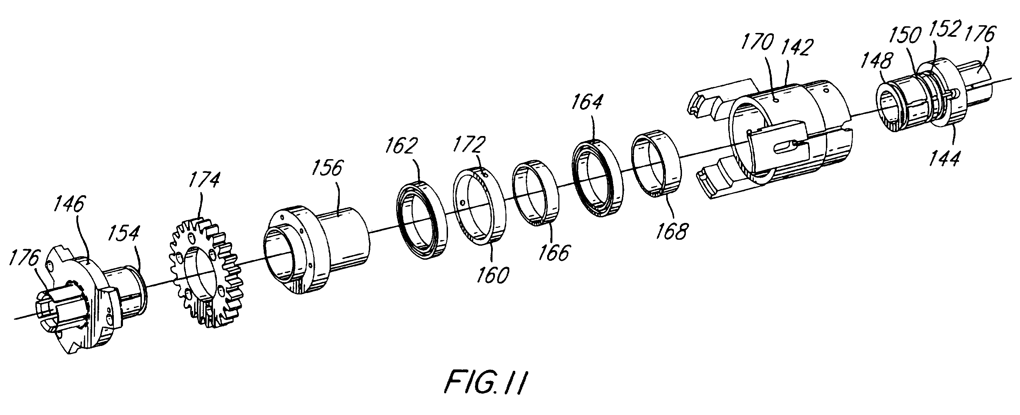

The hybrid probe according to the preferred embodiment of the invention is quite straightforward. An embodiment is shown in Fig. 8 where one can see a complete probe **48** comprising a hollow main body **142**, a triple coil support **144** inserted at the bottom of the main body and single coil support **146** that also serves to close the top of the main body. The triple coil support **144** (Fig. 11) comprises three grooves **148**, **150** and **152**, each receiving a coil. Single coil support **146** receives a single coil in groove **154**. Both single coil support **146** and triple coil support **144** are hollow to permit passage of the rod or tube to be inspected.

In the excitation/detection circuitry of the preferred embodiment, groove **146** receives coil **50**. Grooves **148**, **150** and **152** would respectively receive coils **52**, **58** and **60**. The field altering object orbiting between coils **50** and **52** is supported by a rotating sleeve **156**. The field altering object used is a small ferrite. Ferrite possesses the great advantage of having a high magnetic permeability combined with a low electrical conductivity. The ferrite is inserted in the periphery of rotating sleeve **156**, in a positioning hole **158** (Fig. 10).

The rotating sleeve **156** (Fig. 11) is supported inside main body **142** by an external ring **160**, a first ball bearing **162** and a second ball bearing **164**. A first spacer ring **166** is inserted immediately after bearing **162** to keep it in place. The outside diameter of spacer ring **166** is smaller than the inside diameter of the external ring **160**, allowing for free rotation of external ring **160**. Bearing **164** is maintained in place (against spacer ring **166**) by a second spacer ring **168**. Rotating sleeve **142** is secured to the interior of the main body **142** by screws, using holes **170** on main body **142** and holes **172** on external ring **160**. Centering fingers **176** are peripherally mounted on the top single coil support **146** (where the rod enters) and at the end the triple coil support **144** (where the rod exits). The centering fingers **176** are use to precisely center the probe around the rod. The fingers also eliminate any wobbling of the probe, which might cause an effect similar to the lift-off of rotating probes.

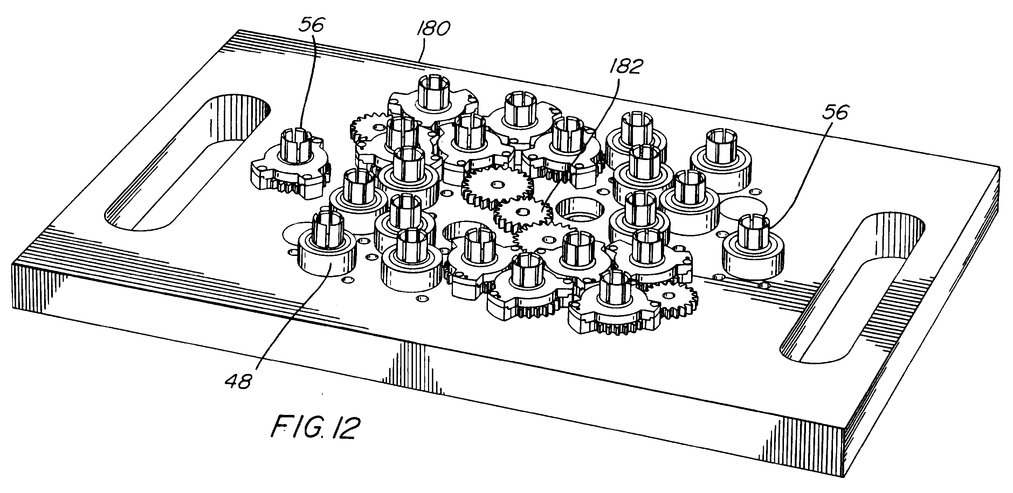

Rotation is transmitted to rotating sleeve **156** via a gear **174** attached on top of the rotating sleeve **156**. In this arrangement, multiple probes can be mounted vertically on a table **180** (Fig. 12) and movement to the ferrite of all the probes can be provided by a single motor via a series of gears **182** or by installing the probes close enough so that their individual gears **174** come in contact. Rotation can then be transmitted directly from one gear to another. Reference probes can also be mounted on the table **180**. As described above, they do not need rotation of the field altering element. Flawless piece of rod are then simply inserted in the reference probe. During the inspection, the rods are lowered together through the probes at a constant speed. This eliminates the need to actually move the probe along the rod since the relative movement is the same.

When the probe is assembled, the ferrite rotates between the coils in grooves **154** and **148** (Fig. 10). This reproduces the arrangement of Fig. 4. If only one coil were used, the additional signal generated by the passage of the ferrite **158** would be relatively small (about five to six times smaller) compared to the signal of the encircling coil in groove **154**. Sandwiching (without any actual contact) the rotating ferrite between coils with opposing magnetic fields, allows the ratio of the two signals to be closer to 1:1 or even 2:1. Coils in groove **154** and **148** are those used in the first bridge of the circuit illustrated in Fig. 7.

With the exception of bearings **162** and **164**, gear **174**, ferrite **158** and the coils themselves, all components are made out of polyetheretherketone (also known as Polyenko® PEEK) a light plastic. Polyetherethereketone is a material that features excellent flame retardance and high heat resistance. But most importantly the material is resistant to gamma radiation, which is very important for use in nuclear power plants. Use of this material makes the probe very light and easy to manufacture.

The probe according to the invention could alternatively be adapted to inspect the inside of tubes. In this embodiment, the both the ferrite and the encircling coils would travel inside the tube. The working principle remains the same with the exception that the surface to be inspected surrounds the encircling coil/orbiting ferrite combination as seen in Fig. 5. The probe thus comprises an internal rotating mechanism to allow the coils and the ferrite to be near the interior wall of the tube. Movement of the ferrite is provided by a small motor inside the probe. Although the invention has been described in detail with reference primarily to the preferred embodiment, this should not be construed as limiting the scope of the invention as defined in the appended claims.

## Claims

1. An eddy current probe for non-destructive testing of a conductive elongated member (44), said probe comprising means (32,34,50,52) for generating an oscillating magnetic field (40,42) directed towards a cross-sectional peripheral surface of said member, said generating means including a pair of coils (32,34) arranged to be spaced apart along said member to produce an enhanced combined magnetic field component perpendicular to said surface in a space between said coils and a reduced magnetic field component along said member, movable means (36) for altering said magnetic field at points along said peripheral surface, characterised in that said movable means (36) are provided between said coils (32,34).

2. The probe as defined in claim 1, wherein said movable means comprise a ferromagnetic member for altering said magnetic field within a small area to be observed covering said points along said peripheral surface.

3. The probe as defined in claim 1, wherein said movable means are rotatable, said elongated member being of circular cross-section.

4. The probe as defined in claim 1, further comprising reference probe means.

5. The probe as defined in claim 1, wherein said probe is arranged to surround said elongated member, said oscillating magnetic field being directed inwardly towards said cross-sectional peripheral surface.

6. The probe as defined in claim 1, wherein said probe is arranged to be within said conductive elongated member, said magnetic field being directed outwardly towards a cross-sectional peripheral surface of said elongated member.

7. The probe as defined in claim 1, further comprising correction probe means including a pair of coils arranged substantially identically to said coils of said generating means.

8. The probe as defined in Claims 3, 4, 5, 6 or 7, wherein said movable means comprise a ferromagnetic member for altering said magnetic field within a small area to be observed covering said points along said peripheral surface.

9. The probe as defined in claims 2, 4, 5, 6 or 7, wherein said movable means are rotatable, said elongated member being of circular cross-section.

10. The probe as defined in claims 2, 3, 4, 5, 6 or 7, wherein said movable means comprise an outer ring gear (174) and mounting means (142,146) for rotatably mounting said probe to a fixed surface with said ring gear exposed on at least one side, said ring gear being sized such that when it is meshed with an adjacent similar such ring gear of an adjacent probe, said ring gear and said adjacent ring gear turn with a same rotational speed with an axis of rotation separated by a predetermined distance corresponding to a predetermined separation of adjacent interconnected rods of an interconnected rod assembly.

11. The eddy current probe as defined in claim 1, 3, 4, 5, 6 or 7, further comprising means for detecting and analyzing an impedance of said generating means as said generating means is moved along said elongated member and as said rotatable altering means is moved over said peripheral surface.

12. The probe as defined in claim 11, wherein said movable means comprise a ferromagnetic member for altering said magnetic field within a small area to be observed covering said points along said peripheral surface.

13. The probe as defined in claim 11, wherein said detecting and analyzing means comprise means for subtracting a signal from said pair of coils of said generating means from a signal from said coils of said correction probe.

14. A method for non-destructive, eddy current testing of a conductive elongated member, comprising the steps of generating an oscillating magnetic field directed towards a cross-sectional peripheral surface of said member using a pair of coils arranged to be spaced apart along said member to produce an enhanced combined magnetic field component perpendicular to said surface in a space between said coils and a reduced magnetic field component along said member, altering said magnetic field at points around said peripheral surface, and detecting and analyzing a permeability of said elongated member along said elongated member and at said points along said peripheral surfaces characterised in that said step of altering comprises altering said enhanced field between said coils.

## Patentansprüche

1. Wirbelstromsonde für das zerstörungsfreie Testen eines leitfähigen, länglichen Elements (44), wobei die Sonde Mittel (32, 34, 50, 52) für die Erzeugung eines oszillierenden Magnetfeldes (40, 42) umfaßt, das zu einer umfänglichen Querschnittsoberfläche des Elements gerichtet ist, wobei die Erzeugungsmittel ein Paar Spulen (32, 34) umfassen, die so angeordnet sind, daß sie entlang dem Element beabstandet sind, um eine erweiterte kombinierte Magnetfeldkomponente senkrecht zur Oberfläche in einem Raum zwischen den Spulen und eine reduzierte Magnetfeldkomponente entlang dem Element zu erzeugen, ein bewegliches Mittel (36) zur Änderung des Magnetfeldes an Punkten entlang der umfänglichen Oberfläche, dadurch gekennzeichnet, daß das bewegliche Mittel (36) zwischen den Spulen (32, 34) angeordnet ist.

2. Sonde nach Anspruch 1, wobei das bewegliche Mittel ein ferromagnetisches Element zur Änderung des Magnetfeldes innerhalb eines kleinen zu überwachenden Bereichs umfaßt, der die Punkte entlang der umfänglichen Oberfläche umfaßt.

3. Sonde nach Anspruch 1, wobei das bewegliche Mittel drehbar ist, wobei das längliche Element einen kreisförmigen Querschnitt aufweist.

4. Sonde nach Anspruch 1, weiters umfassend ein Referenzsondenmittel.

5. Sonde nach Anspruch 1, wobei die Sonde so angeordnet ist, daß sie das längliche Element umgibt, wobei das oszillierende Magnetfeld nach innen zur umfänglichen Querschnittsoberfläche gerichtet ist.

6. Sonde nach Anspruch 1, wobei die Sonde so angeordnet ist, daß sie innerhalb des leitfähigen länglichen Elements liegt, wobei das Magnetfeld nach außen zur umfänglichen Querschnittsoberfläche des länglichen Elements gerichtet ist.

7. Sonde nach Anspruch 1, weiters umfassend ein Korrektursondenmittel mit einem Paar Spulen, die im wesentlichen gleich angeordnet sind wie die Spulen des Erzeugungsmittels.

8. Sonde nach den Ansprüchen 3, 4, 5, 6 oder 7, wobei das bewegliche Mittel ein ferromagnetisches Element zum Ändern des Magnetfeldes innerhalb eines kleinen zu überwachenden Bereichs umfaßt, der die Punkte entlang der umfänglichen Oberfläche umfaßt.

9. Sonde nach den Ansprüchen 2, 4, 5, 6 oder 7, wobei das bewegliche Mittel drehbar ist, wobei das längliche Element einen kreisförmigen Querschnitt aufweist.

10. Sonde nach den Ansprüchen 2, 3, 4, 5, 6 oder 7, wobei das bewegliche Mittel einen äußeren Zahnkranz (174) und Befestigungsmittel (142, 146) zur drehbaren Befestigung der Sonde an einer fixierten Oberfläche umfaßt, wobei der Zahnkranz an mindestens einer Seite freiliegt, wobei der Zahnkranz größenmäßig derart ausgelegt ist, daß, wenn er mit einem ähnlichen benachbarten Zahnkranz einer benachbarten Sonde in Eingriff kommt, sich der Zahnkranz und der benachbarte Zahnkranz mit derselben Drehgeschwindigkeit mit einer Drehachse drehen, die um einen vorherbestimmten Abstand, welcher einer vorherbestimmten Trennung der benachbarten Verbindungsstangen eines Verbindungsstangensatzes entspricht, getrennt ist.

11. Wirbelstromsonde nach Anspruch 1, 3, 4, 5, 6 oder 7, weiters umfassend ein Mittel zur Erkennung und Analyse eines Widerstandes des Erzeugungsmittels, während das Erzeugungsmittel entlang dem länglichen Element bewegt wird, und das drehbare Änderungsmittel über die umfängliche Oberfläche bewegt wird.

12. Sonde nach Anspruch 11, wobei das bewegliche Mittel ein ferromagnetisches Element zur Änderung des Magnetfeldes innerhalb eines kleinen zu überwachenden Bereiches umfaßt, der die Punkte entlang der umfänglichen Oberfläche umfaßt.

13. Sonde nach Anspruch 11, wobei das Erkennungs- und Analysemittel ein Mittel zum Abziehen eines Signals von dem Paar Spulen des Erzeugungsmittels von einem Signal von den Spulen der Korrektursonde umfaßt.

14. Verfahren zum zerstörungsfreien Wirbelstromprüfen eines leitfähigen, länglichen Elements, umfassend die Schritte des Erzeugens eines oszillierenden Magnetfeldes, das zur umfänglichen Querschnittsoberfläche des Elements gerichtet ist, mit Hilfe eines Paars Spulen, die so angeordnet sind, daß sie entlang dem Element beabstandet sind, um eine erweiterte, kombinierte Magnetfeldkomponente senkrecht zur Oberfläche in einem Raum zwischen den Spulen und eine reduzierte Magnetfeldkomponente entlang dem Element zu erzeugen, des Änderns des Magnetfeldes an Punkten rund um die umfängliche Oberfläche, und des Erkennens und Analysierens einer Durchlässigkeit des länglichen Elements entlang des länglichen Elements und an den Punkten entlang der umfänglichen Oberfläche, dadurch gekennzeichnet, daß der Schritt des Änderns das Ändern des erweiterten Feldes zwischen den Spulen umfaßt.

## Revendications

1. Sonde à courants parasites pour tester de façon non destructive un élément allongé conducteur (44), ladite sonde comprenant des moyens (32, 34, 50, 52) pour générer un champ magnétique oscillant (40, 42) dirigé vers une surface périphérique transversale dudit élément, lesdits moyens de génération comprenant une paire de bobines (32, 34) agencées de façon à être espacées le long dudit élément pour produire une composante de champ magnétique combiné amélioré perpendiculaire à ladite surface dans un espace entre lesdites bobines et une composante de champ magnétique réduit le long dudit élément, des moyens mobiles (36) pour faire varier ledit champ magnétique en certains points le long de ladite surface périphérique, caractérisée en ce que lesdits moyens mobiles (36) sont placés entre lesdites bobines (32, 34).

2. Sonde selon la revendication 1, dans laquelle lesdits moyens mobiles comprennent un élément ferromagnétique pour faire varier ledit champ magnétique à l'intérieur d'une petite zone à observer couvrant lesdits points le long de ladite surface périphérique.

3. Sonde selon la revendication 1, dans laquelle lesdits moyens mobiles peuvent être mis en rotation, ledit élément allongé étant de section circulaire.

4. Sonde selon la revendication 1, comprenant en outre des moyens formant une sonde de référence.

5. Sonde selon la revendication 1, dans laquelle ladite sonde est agencée de façon à entourer ledit élément allongé, ledit champ magnétique oscillant étant dirigé vers l'intérieur vers ladite surface périphérique transversale.

6. Sonde selon la revendication 1, dans laquelle ladite sonde est agencée de façon à être à l'intérieur dudit élément allongé conducteur, ledit champ magnétique étant dirigé vers l'extérieur vers une surface périphérique transversale dudit élément allongé.

7. Sonde selon la revendication 1, comprenant en outre des moyens formant une sonde de correction comprenant une paire de bobines agencées sensiblement de la même façon que lesdites bobines desdits moyens de génération.

8. Sonde selon les revendications 3, 4, 5, 6 ou 7, dans laquelle lesdits moyens mobiles comprennent un élément ferromagnétique pour faire varier ledit champ magnétique à l'intérieur d'une petite zone à observer couvrant lesdits points le long de ladite surface périphérique.

9. Sonde selon les revendications 2, 4, 5, 6 ou 7, dans laquelle lesdits moyens mobiles peuvent être mis en rotation, ledit élément allongé étant de section circulaire.

10. Sonde selon les revendications 2, 3, 4, 5, 6 ou 7, dans laquelle lesdits moyens mobiles comprennent un engrenage annulaire extérieur (174) et des moyens de montage (142, 146) pour monter de manière rotative ladite sonde sur une surface fixe, ledit engrenage annulaire étant exposé sur au moins un côté, ledit engrenage annulaire étant dimensionné de façon que lorsqu'il engrène un tel engrenage annulaire similaire adjacent d'une sonde adjacente, ledit engrenage annulaire et ledit engrenage annulaire adjacent tournent à une même vitesse de rotation sur un axe de rotation séparé d'une distance prédéterminée correspondant à un écartement prédéterminé de barres interconnectées adjacentes d'un ensemble de barres interconnectées.

11. Sonde à courants parasites selon la revendication 1, 3, 4, 5, 6 ou 7, comprenant en outre des moyens pour détecter et analyser une impédance desdits moyens de génération à mesure que lesdits moyens de génération sont déplacés le long dudit élément allongé et que lesdits moyens rotatifs variateurs de champ sont déplacés au-dessus de ladite surface périphérique.

12. Sonde selon la revendication 11, dans laquelle lesdits moyens mobiles comprennent un élément ferromagnétique pour faire varier ledit champ magnétique à l'intérieur d'une petite zone à observer couvrant lesdits points le long de ladite surface périphérique.

13. Sonde selon la revendication 11, dans laquelle lesdits moyens de détection et d'analyse comprennent des moyens pour soustraire un signal provenant de ladite paire de bobines desdits moyens de génération d'un signal provenant desdites bobines de ladite sonde de correction.

14. Procédé pour tester de façon non destructive par courants parasites un élément allongé conducteur, comprenant les étapes consistant à générer un champ magnétique oscillant dirigé vers une surface périphérique transversale dudit élément à l'aide d'une paire de bobines agencées de façon à être espacées le long dudit élément pour produire une composante combinée et améliorée de champ magnétique perpendiculaire à ladite surface dans un espace entre lesdites bobines et une composante de champ magnétique réduit le long dudit élément, à faire varier ledit champ magnétique en certains points autour de ladite surface périphérique, et à détecter et analyser une perméabilité dudit élément allongé le long dudit élément allongé et auxdits points le long de ladite surface périphérique, caractérisé en ce que ladite étape de variation du champ magnétique comprend la variation dudit champ amélioré entre lesdites bobines.
